# FASCICULE DE BREVET EUROPEEN

(11) **EP 2 372 959 B1**
(45) Date de publication et mention de la délivrance du brevet: **14.09.2016**
(21) Numéro de dépôt: 11305383.9
(22) Date de dépôt: 01.04.2011
(51) Int. Cl.: H04L 12/417

(54) **Procédé et réseau de transmission de paquets de données entre au moins deux dispositifs électroniques.**
Method and network for data packet transmission between at least two electronic devices.
Verfahren und Netz zur Übertragung von Datenpaketen zwischen mindestens zwei elektronischen Vorrichtungen

(30) Priorité: 02.04.2010 FR 1052512
(43) Date de publication de la demande: 05.10.2011
(73) Titulaire: GE Energy Power Conversion Technology Limited, Rugby Warwickshire CV21 1BU (GB)
(72) Inventeur: Begey, Michel, 90300 Offemont (FR)
(74) Mandataire: Serjeants LLP

(56) Documents cités:
- EP-A2- 0 269 376
- EP-A2- 1 482 664
- WO-A2-02/43321
- US-A1- 2003 115 369

## Description

La présente invention concerne un procédé de transmission de paquets de données entre au moins deux dispositifs électroniques, les dispositifs électroniques étant reliés par l'intermédiaire d'un bus de communication, chaque dispositif comportant des moyens d'émission des paquets de données sur le bus de communication, et des moyens de réception des paquets de données issus du bus de communication.

La présente invention concerne également un réseau de transmission de paquets de données comportant au moins deux dispositifs électroniques, les dispositifs étant reliés par l'intermédiaire d'un bus de communication, chaque dispositif comportant des moyens d'émission des paquets de données sur le bus de communication et des moyens de réception des paquets de données issues du bus de communication

En particulier, l'invention s'applique à un procédé de transmission de données offrant un débit élevé de données, typiquement de l'ordre de 10 Mbit/s, de préférence supérieur à 100 Mbit/s, de préférence encore supérieur à 1 Gbit/s.

On connaît un procédé de transmission et un réseau de transmission des types précités. Le bus de communication est un bus Ethernet conforme à la norme IEEE 802.3. Le réseau de transmission Ethernet est de type CSMA/CD (de l'anglais Carrier Sense Multiple Access with Collision Detection). Autrement dit, le réseau Ethernet permet un accès multiple, c'est-à-dire un accès de plusieurs dispositifs électroniques au bus de communication à un même instant, avec écoute de la porteuse et une détection des collisions. Le réseau Ethernet offre également une grande souplesse d'utilisation, puisqu'il est possible d'ajouter des dispositifs électroniques sur le bus Ethernet sans avoir à le reconfigurer.

Toutefois, des collisions peuvent se produire de manière aléatoire lorsque deux dispositifs électroniques émettent des données au même instant. De telles collisions peuvent entraîner une perte de données, et diminuent les débits de transmission de données sur le réseau. Un tel procédé de transmission ne permet pas un fonctionnement temps-réel du réseau de transmission.

Le préambule des revendications indépendantes peut être dérivé de WO 02/43321 A2.

Le but de l'invention est de proposer un procédé de transmission et un réseau de transmission permettant d'éviter de telles collisions et d'augmenter la qualité de la transmission des données sur le bus de communication.

A cet effet, l'invention a pour objet un procédé de transmission du type précité, le procédé comportant :
- la détermination initiale d'une liste de séquencement contenant, pour chaque paquet de données à émettre, l'identification du dispositif électronique prévu pour émettre ledit paquet, ainsi que le numéro d'émission et la taille dudit paquet, la liste de séquencement étant commune à tous les dispositifs électroniques et consultable par chacun d'entre eux, et
- l'émission de chaque paquet de données par le dispositif électronique correspondant à tous les autres dispositifs électroniques dans un cycle de transmission, les paquets étant émis successivement et suivant l'ordre croissant des numéros d'émission contenus dans la liste de séquencement, chaque paquet respectif étant émis par un unique dispositif respectif,
le procédé étant caractérisé en ce que :
- après l'émission ou la réception du dernier paquet de données, chaque dispositif électronique vérifie qu'il est bien synchronisé avec les autres dispositifs électroniques du réseau en mesurant la durée du dernier cycle de transmission et en déterminant si elle appartient à un intervalle prédéfini de valeurs pour la durée du cycle de transmission, et
- lorsque la durée du cycle de transmission est comprise dans l'intervalle prédéfini, alors la synchronisation est correcte et un logiciel de gestion détermine si un nouveau cycle de transmission doit être effectué.

Le procédé de transmission selon l'invention permet en outre de connaître de manière certaine les dates d'émission ou de réception desdits paquets. Un tel procédé offre alors la possibilité d'un fonctionnement temps-réel du réseau de transmission.

Suivant d'autres modes de réalisation, le procédé de transmission comprend une ou plusieurs des caractéristiques suivantes, prises isolément ou suivant toutes les combinaisons techniquement possibles :
- chaque paquet de données respectif ne comporte pas de données de séquencement des paquets exploitables indépendamment de la liste de séquencement ;
- le bus de communication est un bus Ethernet ;
- chaque paquet de données est reçu simultanément par tous les autres dispositifs électroniques ;
- le procédé comporte une pluralité de cycles de transmission, chaque cycle de transmission comportant l'émission de chacun des paquets de données ;
- l'émission du premier paquet du cycle suivant est effectuée automatiquement à la fin du cycle précédent ;
- chaque paquet est émis une seule fois au cours d'un cycle de transmission ;
- la détermination initiale de la liste de séquencement est effectuée de manière prédéterminée et préalablement à la pluralité des cycles de transmission ;
- les données contenues dans chaque paquet sont variables d'un cycle de transmission à l'autre.

L'invention a également pour objet un réseau de transmission du type précité, le réseau comportant des moyens de consultation d'une liste prédéterminée de séquencement contenant, pour chaque paquet de données à émettre, l'identification du dispositif électronique prévu pour émettre ledit paquet, ainsi que le numéro d'émission et la taille dudit paquet, la liste de séquencement étant commune à tous les dispositifs électroniques et consultable par chacun d'entre eux, et les moyens d'émission sont propres à émettre successivement dans un cycle de transmission les paquets de données respectifs suivant l'ordre croissant des numéros d'émission contenus dans la liste de séquencement, chaque paquet respectif étant propre à être émis par un unique dispositif respectif,
le réseau étant caractérisé en ce que :
- après l'émission ou la réception du dernier paquet de données, chaque dispositif électronique est agencé pour vérifier qu'il est bien synchronisé avec les autres dispositifs électroniques du réseau en mesurant la durée du dernier cycle de transmission et en déterminant si elle appartient à un intervalle prédéfini de valeurs pour la durée du cycle de transmission, et
- lorsque la durée du cycle de transmission est comprise dans l'intervalle prédéfini, alors la synchronisation est correcte et un logiciel de gestion est agencé pour déterminer si un nouveau cycle de transmission doit être effectué.

Suivant d'autres modes de réalisation, le réseau de transmission comprend une ou plusieurs des caractéristiques suivantes, prises isolément ou suivant toutes les combinaisons techniquement possibles :
- le bus de communication est un bus Ethernet ;
- chaque dispositif électronique comporte une mémoire contenant la liste prédéterminée de séquencement.

Ces caractéristiques et avantages de l'invention apparaîtront à la lecture de la description qui va suivre, donnée uniquement à titre d'exemple, et faite en référence aux dessins annexés, sur lesquels :
- la figure 1 est une représentation schématique d'un réseau de transmission selon l'invention,
- la figure 2 est un organigramme du procédé de transmission selon l'invention, et
- la figure 3 est une représentation schématique d'un cycle de transmission de données entre trois dispositifs électroniques du réseau de transmission.

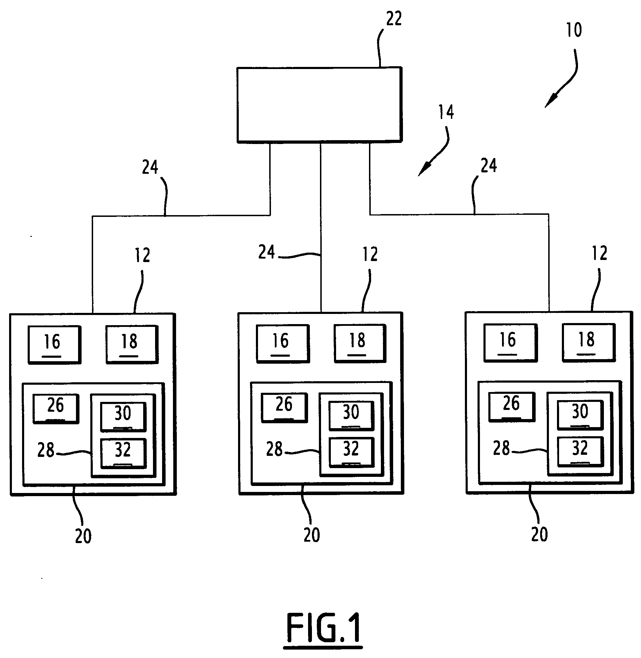

Sur la figure 1, un réseau 10 de transmission de paquets de données comporte trois dispositifs électroniques 12 reliés entre eux par l'intermédiaire d'un bus de communication 14.

Chaque dispositif électronique 12 comporte des moyens 16 d'émission des paquets de données sur le bus de communication, des moyens 18 de réception des paquets de données issus dudit bus, et une unité de traitement d'informations 20. Tous les dispositifs électroniques 12 sont propres à émettre des données sur le bus de communication 14, dont le fonctionnement n'est pas basé sur une relation de type maître/esclave entre les différents dispositifs 12.

Le bus de communication 14 comporte un commutateur réseau 22 (de l'anglais switch) reliant trois liaisons de données 24, chaque liaison de données 24 étant connectée en une extrémité à un dispositif électronique 12 respectif et en l'autre extrémité au commutateur 22.

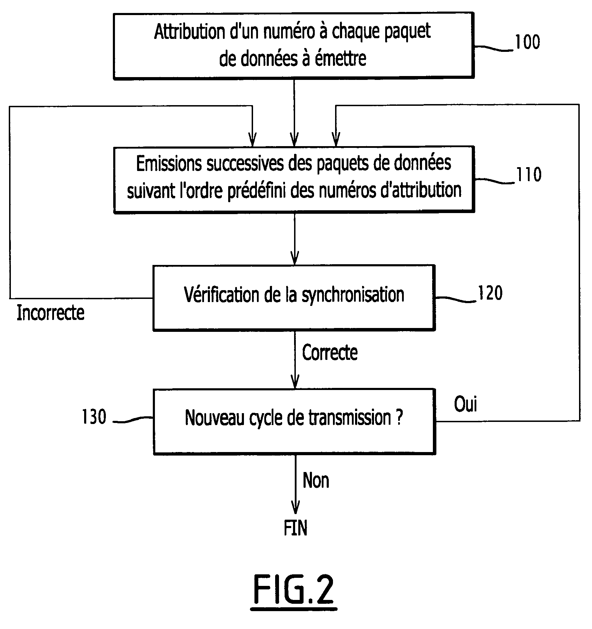

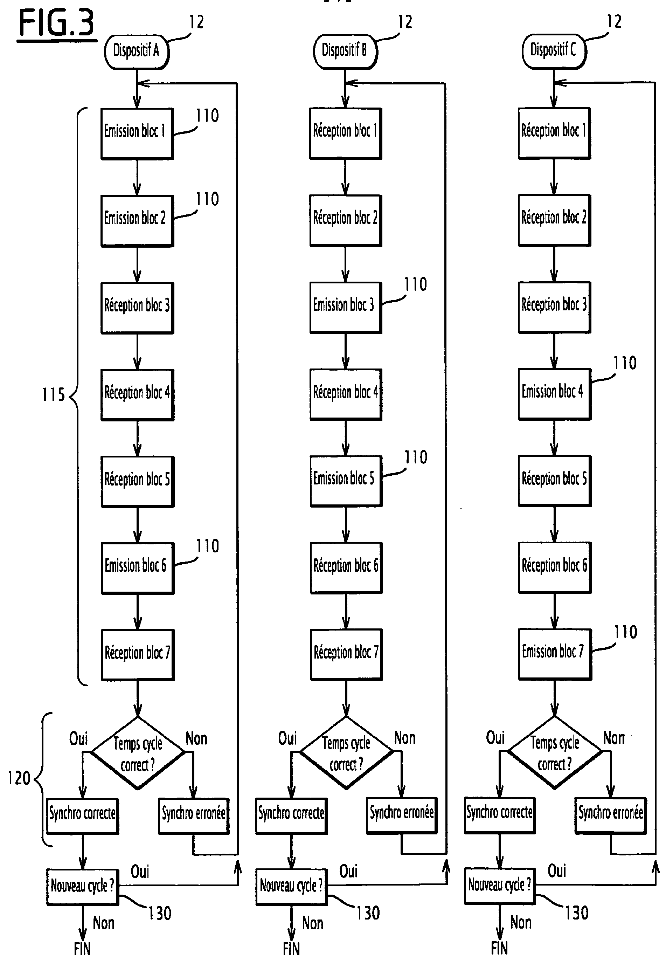

Dans l'exemple de réalisation de la figure 1, le bus de communication 14 est un bus Ethernet, c'est-à-dire un bus de données conforme à la norme IEEE 802.3. Le commutateur 22 est un commutateur Ethernet et les liaisons 24 sont des liaisons Ethernet. Le protocole de transmission selon l'invention sera décrit par la suite en regard des figures 2 et 3. Ce protocole est appelé protocole Fastlink.

Les moyens d'émission 16 sont propres à émettre successivement les paquets de données respectifs suivant l'ordre croissant de numéros d'émission desdits paquets entre tous les dispositifs électroniques 12 du réseau, chaque paquet respectif étant émis par un unique dispositif 12 respectif.

Les moyens de réception 18 sont propres à recevoir les paquets de données émis par les moyens d'émission 16 d'un autre dispositif électronique en diffusion générale à tous les dispositifs électroniques 12 du réseau. La réception d'un paquet de données émis par les moyens d'émission 16 d'un dispositif électronique est simultanée pour les moyens de réception 18 des autres dispositifs électroniques.

L'unité de traitement d'informations 20 est formée, par exemple, d'un processeur de données 26 associée à une mémoire 28.

La mémoire 28 comporte une liste de séquencement 30 contenant, pour chaque paquet de données à émettre, l'identification du dispositif électronique 12 prévu pour émettre ledit paquet, ainsi que le numéro d'émission et la taille dudit paquet. La taille du paquet est, par exemple, exprimée en octets. La liste de séquencement 30 est commune à tous les dispositifs électroniques 12, et est consultable par chacun d'entre eux.

La mémoire 28 est également apte à stocker un logiciel 32 de gestion de l'émission et de la réception des paquets de données. Le logiciel de gestion 32 est apte à déterminer les paquets de données à émettre par le dispositif électronique 12 respectif, et à rechercher, dans la liste de séquencement 30 et pour chaque paquet de données à émettre, son numéro d'émission et le numéro du paquet le précédant immédiatement dans l'ordre croissant. Le logiciel de gestion 32 est également propre à commander l'émission d'un paquet de données respectif, en diffusion générale aux autres dispositifs électroniques, après avoir détecté la réception par les moyens de réception 18 du paquet précédent, ou bien après avoir commandé l'émission en diffusion générale dudit paquet précédent.

En variante, les moyens de gestion 32 sont réalisés sous forme de composants logiques programmables, ou encore sous forme de circuits intégrés dédiés.

Chaque paquet de données comporte, par exemple, un en-tête suivi d'un champ de données. L'en-tête comporte, par exemple, quatre champs successifs. Le premier champ de l'en-tête comporte 14 octets et correspond à la couche de contrôle d'accès au support, également appelée couche MAC (de l'anglais Media Access Control). Le deuxième champ de l'en-tête comporte 1 octet et contient le numéro d'émission du paquet. Le troisième champ de l'en-tête comporte 1 octet et contient un compteur. Le quatrième champ comporte 2 octets et contient la taille du paquet, exprimée en octets.

En variante, chaque paquet de données est constitué de l'en-tête et du champ de données. L'en-tête est constitué des premier, deuxième, troisième et quatrième champs décrits précédemment.

Le paquet de données ne comporte pas de champ de synchronisation utilisé pour la synchronisation entre les émissions des différents paquets. Un tel champ de synchronisation est inutile de par la présence de la liste de séquencement 30. En d'autres termes, chaque paquet de données respectif ne comporte pas de données de séquencement des paquets, exploitables indépendamment de la liste de séquencement 30.

La figure 2 illustre un procédé de transmission des paquets de données selon l'invention.

Lors de l'étape initiale 100, pour chaque dispositif électronique 12 susceptible d'émettre des données, sous forme d'un ou plusieurs paquets de données, et pour chacun du ou des paquets dudit dispositif sont déterminés le numéro distinct d'émission et la taille de paquet. Ces informations sont regroupées dans la liste de séquencement 30, qui est ensuite stockée dans la mémoire 28 de chaque dispositif.

Chaque paquet de données respectif est ensuite émis par un unique dispositif électronique respectif en diffusion générale à tous les autres dispositifs électroniques 12 du réseau, lors de l'étape 110. Les émissions des paquets de données sont effectuées de manière successive et suivant l'ordre croissant des numéros d'émission contenus dans la liste de séquencement 30.

Le dispositif électronique 12 correspondant émet le paquet de données ayant N+1 1 pour numéro d'émission, après avoir détecté la réception par ses moyens de réception 18 du paquet précédent, c'est-à-dire le paquet ayant N pour numéro d'émission, ou bien après avoir commandé l'émission en diffusion générale du paquet précédent numéroté N.

Dans le cas d'une réception du paquet précédent, les moyens de réception 18 déterminent la réception effective en comptant le nombre d'octets reçus pour ledit paquet et en comparant ce nombre à la taille du paquet indiquée dans la liste de séquencement 30, ou encore dans l'en-tête dudit paquet.

Dans le cas d'une émission du paquet précédent, le dispositif électronique 12 correspondant détermine de manière analogue l'émission effective dudit paquet en comptant le nombre d'octets émis pour ledit paquet et en comparant ce nombre à la taille du paquet indiquée dans la liste de séquencement 30, ou encore dans l'en-tête dudit paquet.

L'émission des paquets, successive et suivant l'ordre croissant des numéros d'émission, permet de garantir qu'un seul paquet est susceptible d'être émis à un instant donné, et d'éviter ainsi toute collision sur le bus de communication 14.

Chaque paquet de données émis par un dispositif électronique est reçu simultanément par tous les autres dispositifs électroniques 12.

L'ensemble des émissions de chacun des paquets de données forme un cycle de transmission 115, visible sur la figure 3. Chaque paquet est émis une seule fois au cours d'un cycle de transmission.

A l'issue de chaque cycle de transmission 115, c'est-à-dire après l'émission ou la réception du dernier paquet de données, chaque dispositif électronique 12 vérifie, lors de l'étape 120, qu'il est bien synchronisé avec les autres dispositifs électroniques du réseau. Cette vérification de la synchronisation est effectuée en mesurant la durée du dernier cycle de transmission et en déterminant si elle appartient à un intervalle prédéfini de valeurs pour la durée du cycle de transmission. La transmission d'un paquet de données dure environ 20 µs, et la durée du cycle de transmission 115 est donc sensiblement égale à N x 20 µs, où N représente le nombre de paquets émis au cours du cycle de transmission 115.

Lorsque la durée du cycle de transmission 115 est comprise dans l'intervalle prédéfini, alors la synchronisation est correcte et le logiciel de gestion 32 passe à l'étape suivante 130, afin de déterminer si un nouveau cycle de transmission 115 doit être effectué.

Dans le cas où la durée du dernier cycle de transmission 115 n'appartient pas à l'intervalle prédéterminé, c'est-à-dire dans le cas où la durée du dernier cycle de transmission 115 est supérieure à la valeur maximale dudit intervalle prédéterminé, la synchronisation est incorrecte. Le logiciel de gestion 32 retourne alors, à l'issue d'une temporisation prédéfinie, à l'étape 110 afin que les données contenues dans les paquets émis au cours du dernier cycle 115 soient réémises lors du prochain cycle de transmission 115. La temporisation prédéfinie est une période de temps au cours de laquelle chaque dispositif électronique 12 est susceptible de détecter la synchronisation incorrecte lors du dernier cycle de transmission 115. La réémission des mêmes données au cours du prochain cycle de transmission 115 permet alors aux dispositifs électroniques 12 de se synchroniser à nouveau.

Le procédé comporte, par exemple, une pluralité de cycles de transmission 115, et reboucle alors de l'étape 130 à l'étape 110 tant que le dernier cycle 115 n'a pas été effectué. La détermination de la liste de séquencement 30 réalisée de manière prédéterminée lors de l'étape 100 est alors valable pour la pluralité des cycles de transmission 115.

Lors de l'étape 130, le rebouclage vers l'étape 110 est, par exemple, effectué de manière conditionnelle. Une condition nécessaire est, par exemple, la présence de nouvelles données à émettre. Les nouvelles données sont alors émises lors du prochain cycle de transmission 115.

En variante, une condition nécessaire est, par exemple, l'expiration d'une temporisation de durée prédéterminée. L'émission du premier paquet du cycle suivant est alors effectuée automatiquement à l'issue de cette temporisation déclenchée à la fin du cycle précédent.

En variante encore, le rebouclage vers l'étape 110 est effectué de manière automatique et sans condition lors de l'étape 130. L'émission du premier paquet du cycle suivant est alors effectuée automatiquement à la fin du cycle précédent.

Les données contenues dans le champ de données de chaque paquet sont variables d'un cycle de transmission à l'autre.

Lorsque les données contenues dans le champ de données d'un paquet n'ont pas varié d'un cycle de transmission 115 au suivant, le paquet correspondant est émis avec ces mêmes données lors du cycle de transmission suivant, afin d'assurer la continuité dudit cycle de transmission.

Dans l'exemple de réalisation de la figure 3, le cycle de transmission 115 comporte l'émission de sept paquets de données, également appelés blocs de données. Chaque bloc est émis une seule fois au cours du cycle 115 par le dispositif 12 correspondant. Un même dispositif électronique 12 est propre à envoyer plusieurs blocs de données successivement, tel que représenté pour les blocs numérotés 1 et 2, émis par le dispositif A.

Ainsi, le procédé de transmission selon l'invention permet d'éviter toute collision lors de la transmission des données sur le bus de communication, tel qu'un bus Ethernet conforme à la norme IEEE 802.3. En effet, à tout instant du cycle de transmission, un seul paquet de données est susceptible d'être émis par un dispositif électronique correspondant suivant l'ordre prédéfini préalablement à l'émission des paquets de données. Chaque paquet est en outre émis une seule fois au cours d'un même cycle de transmission.

En outre, chaque dispositif reçoit en même temps un même paquet de données, ce qui permet de synchroniser des éventuels traitements susceptibles d'être réalisés par chacun des dispositifs électroniques à l'issue de la réception d'un paquet de données.

Le procédé de transmission permet également d'effectuer des échanges de données très rapidement entre les dispositifs du réseau, puisque le bus de communication est compatible avec un débit de données égal à 1 Gbit/s.

On conçoit ainsi que le procédé et le réseau de transmission selon l'invention permettent d'éviter des collisions et d'augmenter la qualité de la transmission des données sur le bus de communication.

Le procédé de transmission selon l'invention offre également la possibilité d'un fonctionnement temps-réel du réseau de transmission.

## Revendications

1. Procédé de transmission de paquets de données entre au moins deux dispositifs électroniques (12), les dispositifs électroniques (12) étant reliés par l'intermédiaire d'un bus de communication (14), chaque dispositif (12) comportant des moyens (16) d'émission des paquets de données sur le bus de communication (14), et des moyens (18) de réception des paquets de données issus du bus de communication (14),
le procédé comportant :
- la détermination initiale (100) d'une liste de séquencement contenant, pour chaque paquet de données à émettre, l'identification du dispositif électronique prévu pour émettre ledit paquet, ainsi que le numéro d'émission et la taille dudit paquet, la liste de séquencement étant commune à tous les dispositifs électroniques et consultable par chacun d'entre eux, et
- l'émission (110) de chaque paquet de données par le dispositif électronique correspondant à tous les autres dispositifs électroniques (12) dans un cycle de transmission (115), les paquets étant émis successivement et suivant l'ordre croissant des numéros d'émission contenus dans la liste de séquencement, chaque paquet respectif étant émis par un unique dispositif (12) respectif,
le procédé étant **caractérisé en ce que** :
- après l'émission ou la réception du dernier paquet de données, chaque dispositif électronique (12) vérifie qu'il est bien synchronisé avec les autres dispositifs électroniques (12) du réseau en mesurant la durée du dernier cycle de transmission (115) et en déterminant si elle appartient à un intervalle prédéfini de valeurs pour la durée du cycle de transmission (115), et
- lorsque la durée du cycle de transmission (115) est comprise dans l'intervalle prédéfini, alors la synchronisation est correcte et un logiciel de gestion (32) détermine si un nouveau cycle de transmission (115) doit être effectué.

2. Procédé suivant la revendication 1, dans lequel chaque paquet de données respectif ne comporte pas de données de séquencement des paquets exploitables indépendamment de la liste de séquencement.

3. Procédé selon la revendication 1 ou 2, dans lequel le bus de communication (14) est un bus Ethernet.

4. Procédé selon l'une quelconque des revendications précédentes, dans lequel chaque paquet de données est reçu simultanément par tous les autres dispositifs électroniques (12).

5. Procédé selon l'une quelconque des revendications précédentes, le procédé comportant une pluralité de cycles de transmission (115), chaque cycle de transmission (115) comportant l'émission de chacun des paquets de données.

6. Procédé selon la revendication 5, dans lequel l'émission du premier paquet du cycle suivant est effectuée automatiquement à la fin du cycle précédent.

7. Procédé selon la revendication 5 ou 6, dans lequel chaque paquet est émis une seule fois au cours d'un cycle de transmission (115).

8. Procédé selon l'une quelconque des revendications 5 à 7, dans lequel la détermination initiale (100) de la liste de séquencement est effectuée de manière prédéterminée et préalablement à la pluralité des cycles de transmission (115).

9. Procédé selon l'une quelconque des revendications 5 à 8, dans lequel les données contenues dans chaque paquet sont variables d'un cycle de transmission (115) à l'autre.

10. Réseau (10) de transmission de paquets de données comportant au moins deux dispositifs électroniques (12), les dispositifs (12) étant reliés par l'intermédiaire d'un bus de communication (14), chaque dispositif (12) comportant des moyens (16) d'émission des paquets de données sur le bus de communication (14) et des moyens (18) de réception des paquets de données issues du bus de communication (14),
le réseau (10) comportant des moyens de consultation d'une liste prédéterminée de séquencement contenant, pour chaque paquet de données à émettre, l'identification du dispositif électronique prévu pour émettre ledit paquet, ainsi que le numéro d'émission et la taille dudit paquet, la liste de séquencement étant commune à tous les dispositifs électroniques et consultable par chacun d'entre eux, et
les moyens d'émission (16) sont propres à émettre successivement dans un cycle de transmission (115) les paquets de données respectifs suivant l'ordre croissant des numéros d'émission contenus dans la liste de séquencement, chaque paquet respectif étant propre à être émis par un unique dispositif (12) respectif,
le réseau (10) étant **caractérisé en ce que** :
- après l'émission ou la réception du dernier paquet de données, chaque dispositif électronique (12) est agencé pour vérifier qu'il est bien synchronisé avec les autres dispositifs électroniques (12) du réseau en mesurant la durée du dernier cycle de transmission (115) et en déterminant si elle appartient à un intervalle prédéfini de valeurs pour la durée du cycle de transmission (115), et
- lorsque la durée du cycle de transmission (115) est comprise dans l'intervalle prédéfini, alors la synchronisation est correcte et un logiciel de gestion (32) est agencé pour déterminer si un nouveau cycle de transmission (115) doit être effectué.

11. Réseau de transmission selon la revendication 10, dans lequel le bus de communication (14) est un bus Ethernet.

12. Réseau de transmission selon la revendication 10 ou 11, dans lequel chaque dispositif électronique (12) comporte une mémoire (28) contenant la liste prédéterminée de séquencement.

## Patentansprüche

1. Verfahren zur Übertragung von Datenpaketen zwischen wenigstens zwei elektronischen Einrichtungen (12), wobei die elektronischen Einrichtungen (12) durch Zwischenschaltung eines Kommunikationsbusses (14) verbunden sind, wobei jede Einrichtung (12) Mittel (16) zum Senden von Datenpaketen auf dem Kommunikationsbus (14) und Mittel (18) zum Empfang von Datenpaketen, die von dem Kommunikationsbus (14) stammen, aufweist, wobei das Verfahren umfasst:
- die Ausgangsbestimmung (100) einer Sequenzliste aufweisend für jedes zu sendende Datenpaket die Identifikation der elektronischen Einrichtung, die dazu vorgesehen ist, dieses Paket zu senden, sowie die Sendenummer und die Größe dieses Pakets, wobei die Sequenzliste für alle elektronischen Einrichtungen gemeinsam ist und durch jede unter ihnen aufrufbar ist und
- das Senden (110) von jedem Datenpaket durch die entsprechende elektronische Einrichtung an alle anderen elektronischen Einrichtungen (12) während eines Sendezyklus (115), wobei die Pakete nacheinander und gemäß der aufsteigenden Reihenfolge der in der Sequenzliste enthaltenen Nummern gesendet werden, wobei das jeweilige Paket durch eine einzige jeweilige Einrichtung (12) gesendet wird,
wobei das Verfahren **dadurch gekennzeichnet ist, dass**:
- nach dem Senden oder dem Empfangen des letzten Datenpaketes jede elektronische Einrichtung (12) verifiziert, dass sie mit den anderen elektronischen Einrichtungen (12) des Netzes gut synchronisiert ist, indem die Dauer des letzten Übertragungszyklus (115) gemessen wird und indem ermittelt wird, ob sie zu einem vordefinierten Intervall von Werten für die Dauer des Übertragungszyklus (115) gehört, und
- wenn die Dauer des Übertragungszyklus (115) in dem vordefinierten Intervall enthalten ist, dann ist die Synchronisation korrekt und eine Planungssoftware (32) ermittelt, ob ein neuer Übertragungszyklus (115) ausgeführt werden muss.

2. Verfahren nach Anspruch 1, bei dem jedes jeweilige Datenpaket keine Sequenzdaten der Pakete aufweist, die unabhängig von der Sequenzliste nutzbar sind.

3. Verfahren nach Anspruch 1 oder 2, bei dem der Kommunikationsbus (14) ein Ethernetbus ist.

4. Verfahren nach irgendeinem der vorhergehenden Ansprüche, bei dem jedes Datenpaket simultan durch alle anderen elektronischen Einrichtungen (12) empfangen wird.

5. Verfahren nach irgendeinem der vorhergehenden Ansprüche, wobei das Verfahren eine Mehrzahl von Übertragungszyklen (115) aufweist, wobei jeder Übertragungszyklus (115) das Senden von jedem der Datenpakete aufweist.

6. Verfahren nach Anspruch 5, bei dem das Senden des ersten Datenpaketes des nachfolgenden Zyklus automatisch am Ende des vorhergehenden Zyklus ausgeführt wird.

7. Verfahren nach Anspruch 5 oder 6, bei dem jedes Paket während des Ablauf eines Übertragungszyklus (115) ein einziges Mal gesendet wird.

8. Verfahren nach irgendeinem der Ansprüche 5 bis 7, bei dem die Ausgangsbestimmung (100) der Sequenzliste auf eine vorgegebene Weise und vor der Mehrzahl von Übertragungszyklen (115) ausgeführt wird.

9. Verfahren nach irgendeinem der Ansprüche 5 bis 8, bei dem die in jedem Paket enthaltenen Daten von einem Übertragungszyklus (115) zum nächsten variabel sind.

10. Netz (10) zur Übertragung von Datenpaketen aufweisend zumindest zwei elektronische Einrichtungen (12), wobei die Einrichtungen (12) durch Zwischenschalten eines Kommunikationsbusses (14) verbunden sind, wobei jede Einrichtung (12) Mittel (16) zum Senden von Datenpaketen auf dem Kommunikationsbus (14) und Mittel (18) zum Empfang der Datenpakete, die von dem Kommunikationsbus (14) stammen, aufweist,
wobei das Netz (10) Mittel zum Aufrufen einer vorbestimmten Sequenzliste aufweist, die für jedes zu sendende Datenpaket die Identifikation der elektronischen Einrichtung, die für das Senden des Datenpakets vorgesehen ist, sowie die Sendenummer und die Größe des Datenpaketes enthält, wobei die Sequenzliste für alle elektronischen Einrichtungen gemeinsam und durch jede unter ihnen aufrufbar ist, und
die Mittel zum Senden (16) dazu eingerichtet sind, in einem Übertragungszyklus (115) nacheinander die jeweiligen Datenpakete gemäß einer aufsteigenden Reihenfolge der in der Sequenzliste enthaltenen Sendenummern zu senden, wobei jedes jeweilige Paket dazu eingerichtet ist, durch eine einzige jeweilige Einrichtung (12) gesendet zu werden,
wobei das Netz (10) **dadurch gekennzeichnet ist, dass**:
- nach dem Senden oder dem Empfangen des letzten Datenpaketes jede elektronische Einrichtung (12) zur Verifikation eingerichtet ist, dass sie gut mit den anderen elektronischen Einrichtungen (12) des Netzes synchronisiert ist, indem die Dauer des letzten Übertragungszyklus (115) gemessen wird und indem ermittelt wird, ob sie zu einem vordefinierten Intervall von Werten für die Dauer des Übertragungszyklus (115) gehört, und
- wenn die Dauer des Übertragungszyklus (115) in dem vordefinierten Intervall enthalten ist, dann ist die Synchronisation korrekt und ein Planungsprogramm (32) ist eingerichtet zur Ermittlung, ob ein neuer Übertragungszyklus (115) ausgeführt werden muss.

11. Netz zur Übertragung nach Anspruch 10, bei dem der Kommunikationsbus (14) ein Ethernetbus ist.

12. Netz zur Übertragung nach Anspruch 10 oder 11, bei dem jede elektronische Einrichtung (12) einen Speicher (28) aufweist, der die vorbestimmte Sequenzliste enthält.

## Claims

1. Method for transmitting data packets between at least two electronic devices (12), the electronic devices (12) being connected via a communication bus (14), each device (12) comprising means (16) for transmission of data packets on the communication bus (14) and means (18) for receiving data packets from the communication bus (14), the means comprising:
- initial determination (100) of a sequencing list containing, for each data packet to be transmitted, identification of the electronic device scheduled to transmit said packet, and the transmission number and size of said packet, the sequencing list being common to all electronic devices and able to be consulted by each of them, and
- transmission (110) of each data packet by the corresponding electronic device to all other electronic devices (12) in a transmission cycle (115), the packets being transmitted successively and in increasing order of transmission numbers contained in the sequencing list, each respective packet being transmitted by a single respective device (12),
the method being **characterised in that**:
- after transmission or reception of the last data packet, each electronic device (12) verifies that it is correctly synchronised with the other electronic devices (12) of the network by measuring the duration of the last transmission cycle (115) and determining whether it belongs to a predefined range of values for the duration of the transmission cycle (115), and
- when the duration of the transmission cycle (115) lies within the predefined range, synchronisation is correct and a management software (32) determines whether a new transmission cycle (115) must be performed.

2. Method according to claim 1, wherein each respective data packet does not comprise packet sequencing data which could be used independently of the sequencing list.

3. Method according to claim 1 or 2, wherein the communication bus (14) is an Ethernet bus.

4. Method according to any of the preceding claims, wherein each data packet is received simultaneously by all other electronic devices (12).

5. Method according to any of the preceding claims, the method comprising a plurality of transmission cycles (115), each transmission cycle (115) comprising the transmission of each of the data packets.

6. Method according to claim 5, wherein the first packet of the following cycle is transmitted automatically at the end of the preceding cycle.

7. Method according to claim 5 or 6, wherein each packet is transmitted once only during a transmission cycle (115).

8. Method according to any of claims 5 to 7, wherein the initial determination (100) of the sequencing list is performed in a predefined manner prior to the plurality of transmission cycles (115).

9. Method according to any of claims 5 to 8, wherein the data contained in each packet are variable from one transmission cycle (115) to another.

10. Data packet transmission network (10) comprising at least two electronic devices (12), the devices (12) being connected via a communication bus (14), each device (12) comprising means (16) for transmission of data packets on the communication bus (14) and means (18) for receiving data packets from the communication bus (14),
the network (10) comprising means for consultation of a predefined sequencing list containing, for each data packet to be transmitted, identification of the electronic device scheduled to transmit said packet and the transmission number and size of the packet, the sequencing list being common to all electronic devices and able to be consulted by each of them, and
the transmission means (16) are able to transmit the respective data packets successively in a transmission cycle (115) in the increasing order of the transmission numbers contained in the sequencing list, each respective packet being able to be transmitted by single respective device (12),
the network (10) being **characterised in that**:
- after transmission or reception of the last data packet, each electronic device (12) is configured to verify that it is correctly synchronised with the other electronic devices (12) of the network by measuring the duration of the last transmission cycle (115) and determining whether it belongs to a predefined range of values for the duration of the transmission cycle (115), and
- when the duration of the transmission cycle (115) lies within the predefined range, synchronisation is correct and a management software (32) determines whether a new transmission cycle (115) must be performed.

11. Transmission network according to claim 10, wherein the communication bus (14) is an Ethernet bus.

12. Transmission network according to claim 10 or 11, wherein each electronic device (12) comprises a memory (28) containing the predefined sequencing list.
